# EUROPEAN PATENT SPECIFICATION

(11) **EP 3 323 645 B1**
(45) Date of publication and mention of the grant of the patent: **28.04.2021**
(21) Application number: 17201768.3
(22) Date of filing: 15.11.2017
(51) Int. Cl.: B60D 5/00, B61D 17/22, B62D 47/02

(54) **CONCERTINA DEVICE FOR CONNECTING AND CLOSING ARTICULATED BUSES**
FALTENBALGVORRICHTUNG ZUM VERBINDEN UND SCHLIESSEN VON GELENKBUSSEN
DISPOSITIF EN ACCORDÉON POUR RELIER ET FERMER DES BUS ARTICULÉS

(30) Priority: 17.11.2016 IT 201600116339
(43) Date of publication of application: 23.05.2018
(73) Proprietor: P.E.I. Protezioni Elaborazioni Industriali S.r.l., 40012 Calderara di Reno (Bologna) (IT)
(72) Inventor: GUIDI, Luca, 40131 BOLOGNA (IT); BENEDETTI, Michele, 40132 BOLOGNA (IT)
(74) Representative: Milli, Simone

(56) References cited:
- EP-A1- 0 537 670
- EP-A1- 2 853 421
- DE-A1- 4 322 098

## Description

The present invention relates to a concertina for connecting and closing articulated road vehicles.

More specifically, this invention can be advantageously applied where adjacent carriages of buses are to be joined together.

Specific reference will be made below to the concertinas used at the joints of articulated buses.

As is known, in an articulated bus, between the two carriages of which it is composed, there is a rotatable platform (known as "rack'), the purpose of which is also that of allowing both the passage and the standing of passengers in the connecting zone between the carriages.

The connecting zone must inevitably guarantee safe conditions even when the bus goes round a bend, that is to say, even when the two carriages are not aligned with each other allowing a tunnel-like free passage.

For that purpose, the connecting zone is closed inside a concertina, which is shaped to define a tunnel for passage between the two carriages, to which it is connected.

More specifically, the ends of the concertina are connected to the free ends of the two carriages, in such a way that the concertina deforms when the bus adopts configurations wherein the two carriages are not are aligned with each other.

A concertina of this type normally has a plurality of bands, which are made of flexible material, usually plasticised fabric, which are equipped with stiffening frames and are sewn together longitudinally.

Generally speaking, the concertina also extends partly under the rotary platform and is closed at the bottom. The document DE 43 22 098 A1 discloses a concertina device according to the preamble of claim 1.

It has been found, in particular in regions where the road surface is particularly uneven, that there is a rapid wear of the concertina, that is to say, a damage of the lower portion of the concertina (after, for example, impacts with the road surface).

As a result of damage to the lower portion, the entire concertina or a central portion of the bottom is generally replaced at present.

This obviously requires a stationary time of the vehicle which is particularly long and with considerable costs.

The need is strongly felt for providing a solution which allows for the repair of the damaged concertina with low costs and with extremely reduced downtimes for the vehicle.

The aim of this invention is to satisfy the above-mentioned need of providing aconnection and closing concertina for articulated vehicles (buses) which can be replaced, in the case of damage, in a particularly quick and simple way.

This aim is fully achieved by the connection and closing concertina for articulated vehicles (buses) according to this invention, and as characterised in the appended claims.

This aim is fully achieved by the replacement method according to this invention as characterised in the appended claims.

The technical features of the invention will become more apparent from the following detailed description of a preferred, non-limiting embodiment, with reference to the accompanying drawings, in which:
- Figure 1 shows an articulated vehicle, in particular a bus, equipped with a connection and containment concertina made in accordance with this invention;
- Figure 2 shows the concertina of Figure 1 assembled in its operating configuration;
- Figure 3 shows the concertina of Figure 1 disassembled into two parts;
- Figures 4 and 5 are two enlarged views of two respective details of Figure 2 (Figure 4 shows the concertina in a partly assembled configuration); and
- Figure 6 shows a variant of the detail of Figure 4.

With reference to the accompanying drawings, the numeral 1 denotes in its entirety a concertina device for connecting and closing the free space between the articulated unit of an articulated bus.

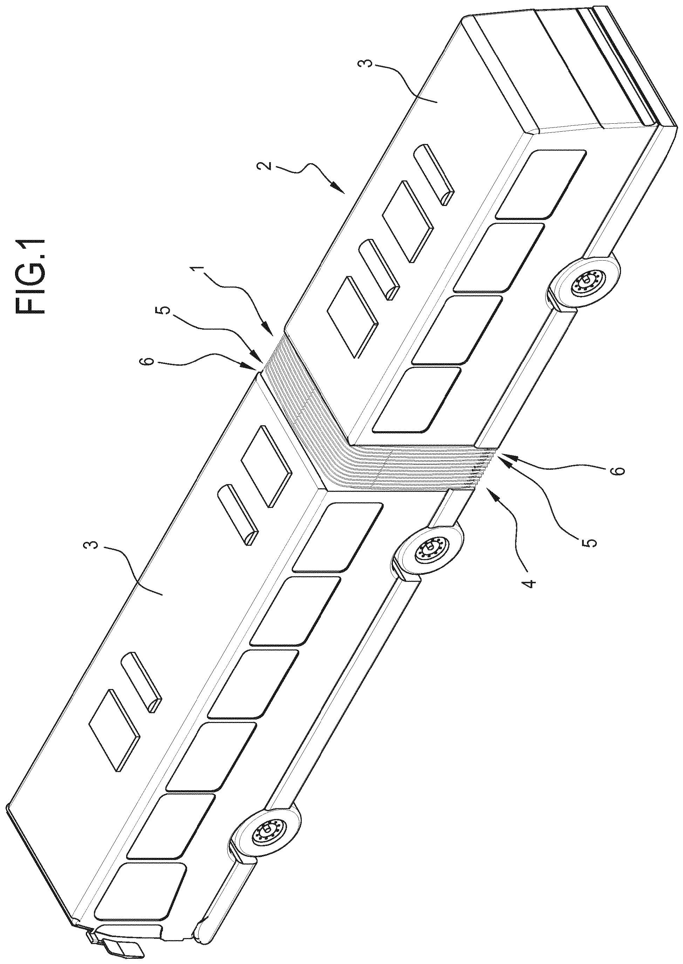

More specifically, Figure 1 shows the concertina 1 mounted on a bus 2 to join together the areas of two adjacent carriages 3 (or units 3) at the articulated joint (not illustrated) for connecting between the latter.

The articulated joint, not illustrated, allows the relative movement of the two articulated units 3.

There is a rotatable platform (not illustrated) at the articulated joint.

The passage of the passengers is generally allowed at the articulated jointing the connecting zone between the carriages 3.

The concertina 1 is shaped to define a tunnel 4 for the passage and connection between the two carriages 3, to which it is connected.

More specifically, the ends 5 of the concertina are connected to the free ends 6 of the two carriages 3, in such a way that the concertina 1 deforms when the bus 2 adopts configurations wherein the two carriages 3 are not are aligned with each other, as occurs during the normal drive.

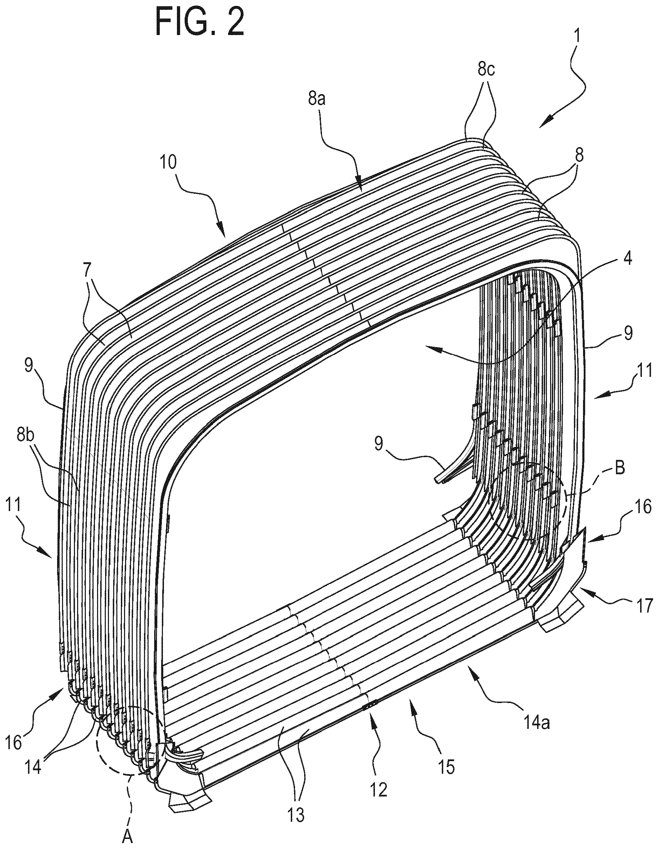

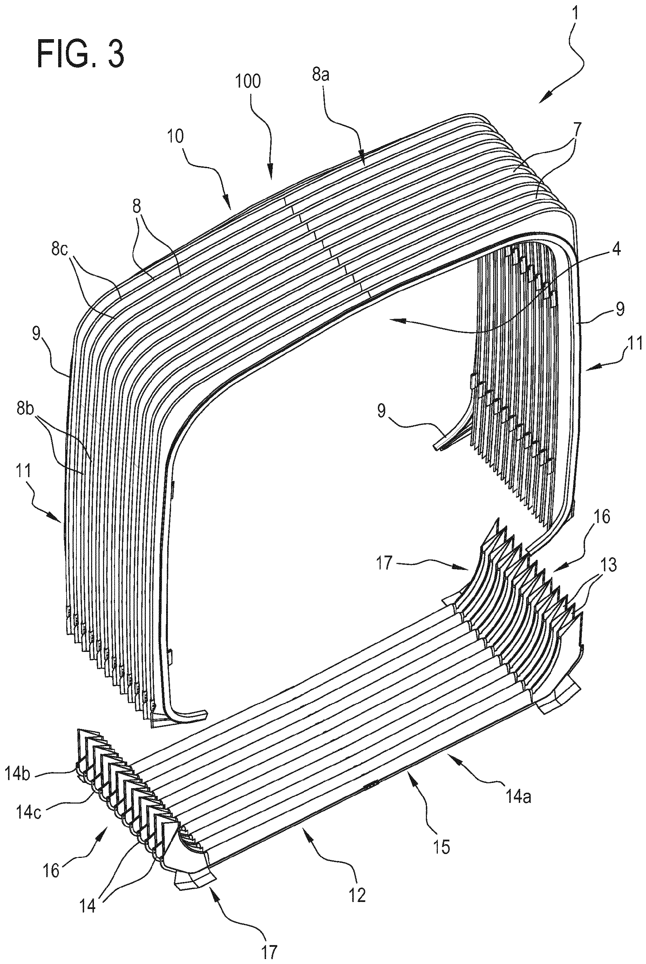

As better illustrated in Figures 2 and 3, the concertina 1 comprises a plurality of bands 7 made of flexible material and equipped with stiffening frames 8.

Preferably, the bands 7 are made of plasticised fabric and the stiffening frames 8 are made, generally, of aluminium (more generally of metal material).

The bands 7 are joined together, one relative to another adjacent to it, to form the above-mentioned tunnel 4 for connection between two carriages 3. Preferably, but not necessarily, the bands 7 are sewn to each other.

The purpose of the stiffening frames 8 is to structurally stiffen the tunnel 4. The tunnel 4 is connected to the carriages 3 through respective end frames 9.

The tunnel 4 comprises an upper wall 10 and two side walls 11.

Under the rotatable platform (not illustrated) there can be pipes (not illustrated) and cables (not illustrated) which are necessary for the correct operation of the carriages 3.

According to the invention, the concertina device 1 has a tubular shape and also extends under the rotary platform, and, according to the invention, is provided underneath with a replaceable bottom 12, that is, an interchangeable portion 12.

The bottom 12 for closing the tunnel 4 is designed to act as a screen for the rotatable platform, screening it from the outside environment.

It may also attenuate the noise which strikes the platform from the road surface, in this way increasing the acoustic comfort for the passengers. The closing bottom 12 is formed by a plurality of bands 13 made of flexible material, joined together one alongside the other and equipped with a plurality of stiffening frames 14.

The stiffening frames 14 are connected to the bands 13, preferably connected at the outer crests of them.

Similarly to what is provided for the portion of the concertina 1 which defines the tunnel 4, preferably, the bands 13 are made of plasticised fabric and the stiffening frames 14 are made of metallic material (preferably aluminium).

In this case, too, the bands 13 are preferably sewn together and the stiffening frames 14 are designed to structurally stiffen the closing bottom 12.

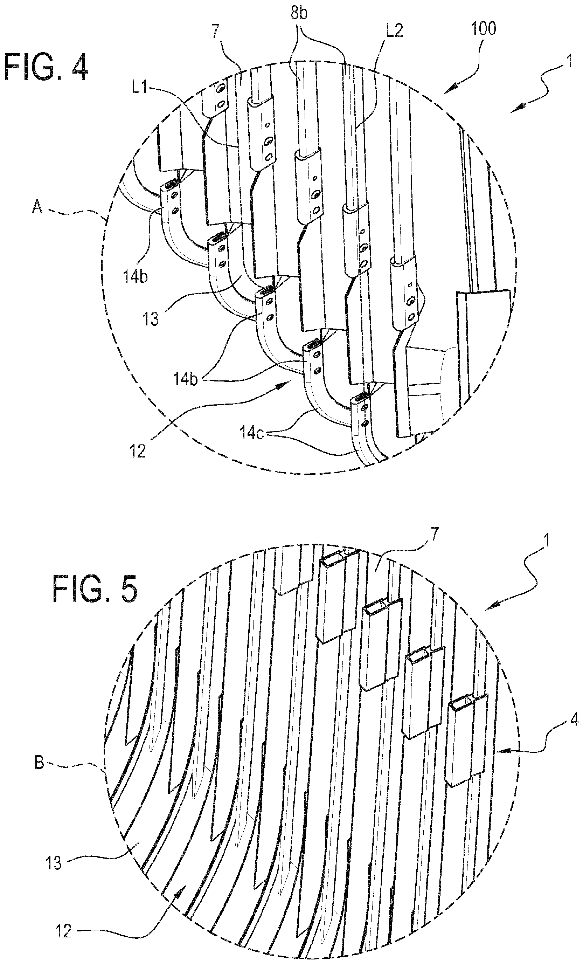

More specifically, as shown in Figure 4, the bands 13 and the stiffening frame 14 are aligned with the corresponding bands 7 and with the corresponding stiffening frames 8 of the tunnel 4 along respective closing lines L1 and L2 in the shape of a ring.

In this way, when the bus 2 meets a bend and the tunnel 4 compresses from the side facing towards the inside of the bend and extends from the side facing towards the outside of the bend, the closing bottom 12 also follows substantially the same type of deformation.

The closing bottom 12 comprises a lower wall 15, which is opposite the upper wall 10 of the tunnel 4, and two side walls 16, which are laterally alongside and fixed to, as described in detail below) the side walls 11 of the tunnel 4 inside the tunnel 4 itself.

It should be noted that the concertina 1 comprises basically two parts: an upper part, 100, with an inverted "U" shape, and a lower part or bottom 12 with a "U" shape.

The bottom 12 is removably connectable to the upper part, 100.

According to the invention, the two concertina side walls 16 are positioned side by side, generally in contact, inside the side walls 11 of the upper portion 100.

This positioning alongside each other is better shown in Figure 5, where it can be seen that the concertina 1 has a double layer, or more specifically, an inner layer, defined by the bands 13 of the side walls 16, and an outer layer, defined by the bands 7 of the side walls 11.

It should be noted that, according to an embodiment not illustrated, the concertina device may comprise further fastening and connection elements (not illustrated) between the inner layer, defined by the bands 13 of the side walls 16, and the outer layer, defined by the bands 7 of the side walls 11.

The elements may comprise one or more profiles and elements, which fix the bands 13 to the bands 7 in the lateral side-by-side zone defined above (which is located inside the tunnel 4).

More specifically, the upper part of the concertina 1, that is to say, the tunnel 4, is fitted on the lower part of the concertina 1, that is to say, on the closing bottom 12. This guarantees an effective run off of rainwater and prevents the rainwater, or splashes coming from the road surface, reaching the inside of the tunnel 4.

On the other hand, the coupling between the upper portion 100 and the lower portion 12, that is to say, between the tunnel 4 and the bottom 12, occurs by coupling the stiffening frames 8, 14.

Both the stiffening frames 8 and the stiffening frames 14 extend in a "U" shape. Each frame 8, 14 has, in the embodiment illustrated, a central stretch 8a, 14a which is straight and horizontal and two end stretches 8b, 14b which are straight and vertical, which are joined to the central stretch 8a, 14a by rounded corner portions 8c, 14c.

It should be noted that, more generally speaking, the frames 8, 14 might have different profiles (not necessarily with straight stretches): more generally speaking, the frames 8, 14 can have curvilinear sections, alternated with the straight stretches, or only curvilinear sections.

Figure 4 shows the upper portion 100 and the lower portion or bottom 12 uncoupled from each other.

The tunnel 4 is connected to the carriages 3 through respective end frames 9.

The bottom 12 is connected to the carriages by a removable fabric, not illustrated.

The solution described above allows an assembling and disassembling of the bottom 12 for closing the tunnel 4 which is particularly fast. Advantageously, in effect, in the event of damage to the lower portion 12, it is possible to replace only the lower portion 12 in a particularly fast, simple and easy manner.

It is not necessary to remove the upper part of the concertina device 1.

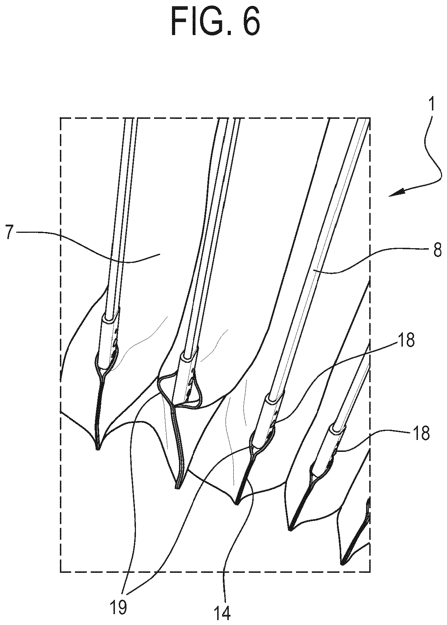

According to the invention, clearly shown in the embodiment of Figure 6, the stiffening frames 8 and the stiffening the frames 14 are joined together by fastening means 18.

The fastening means 18 are preferably screw fastening means to allow and easy assembly and easy disassembly of the bottom 12 for closing the tunnel 4.

According to another embodiment, the fixing means 18 comprise automatic clips.

According to the invention, at each stiffening frame 8, the lower band of the tunnel 4 has a plurality of slots or openings 19 through which each stiffening frame 8 is connected and fixed to the corresponding stiffening frame 14.

More specifically, the bands 7 have a plurality of slots or openings 19 through which each stiffening frame 8 is connected and fixed to the corresponding stiffening frame 14.

It should be noted that the stiffening frames 14 of the bottom 12 are inserted passing freely through the openings 19, for coupling with the stiffening frames 8 of the tunnel 4, that is to say, of the upper portion 100. The fixing means between the frames 8, 14 could be of any type: for example, rivets, snap-in connecting elements, etc.

This solution guarantees a greater structural solidity of the entire concertina 1.

The invention achieves the present aim. In effect, on the one hand, the closing bottom 12 is coupled in a simple, effective and durable manner to the overlying part of the concertina 1, that is to say, to the tunnel 4, on the other hand, its removal is easy and fast, and its replacement makes it possible to easily overcome the problems of wear which often affect the lower corner portions of the concertinas.

The invention also relates to a method for replacing an existing concertina device for connecting and closing the space between two units of an articulated bus, with the concertina device comprising a plurality of first stiffening frames and a concertina element extending annularly in the closed space comprising a lower wall, a pair of side walls facing each other and connected on both sides to the upper wall and a lower wall connected on both sides to the side walls, the method comprising the following steps:
cutting a lower portion of the side walls of the concertina element, annulling the existing concertina device in such a way as to define an upper portion and a lower portion and removing the lower portion;
preparing a plurality of second bands 13 made of flexible material, joined together one alongside the other, equipped with a plurality of second stiffening frames 14 and forming a closing bottom 12;
coupling the closing bottom 12 to the upper portion of the existing concertina device, by a connection between the second stiffening frames 14 and the first stiffening frames.

Advantageously, according to the method, it is possible to also carry out the "retrofitting" on existing buses in a particularly simple, fast and inexpensive manner, by the maintenance operators for the buses.

Also defined is an articulated bus, comprising:
at least two articulated units;
a connecting joint and junction interposed between the units to allow the relative movement;
a concertina device as described above, designed to close the space between the two articulated units at the connecting joint.

## Claims

1. A concertina device for connecting and closing the space between two articulated units of an articulated bus, which comprises two parts: an upper part (100) having an inverted "U" shape and a closing bottom (12) with a "U" shape, the upper part (100) comprising a plurality of first bands (7), made with a concertina profile, made of flexible material, joined together one alongside the other, equipped with a plurality of first stiffening frames (8) and forming a tunnel (4) having an upper wall (10) and two side walls (11) for connecting together two carriages (3) of a vehicle (2),the concertina device further comprising a plurality of second bands (13) made of flexible material, joined together one alongside the other, equipped with a plurality of second stiffening frames (14) and forming the cited closing bottom (12) for closing the tunnel (4), wherein the closing bottom (12) is removably connectable to the upper part (100) and comprises a lower wall (15), which is opposite the upper wall (10) of the tunnel (4) and two side walls (16), which are laterally alongside the side walls (11) of the tunnel (4) and in contact inside the side walls (11) of the tunnel (4) and wherein in the zone in which the side walls (16) of the closing bottom (12) are laterally alongside the side walls (11) of the tunnel (4), the concertina (1) has a double layer formed by the first and second bands (7, 13) the concertina device being **characterized in that** the first stiffening frames (8) and the second stiffening frame (14) are joined together by fastening means (18) and **in that** at each first stiffening frame (8), the lower strip of the tunnel (4) has a slot (19) through which the first stiffening frame (8) is connected and fixed to the corresponding second stiffening frame (14).

2. The concertina device according to claim 1, **characterised in that** the two side walls (16) are laterally alongside the side walls (11) of the tunnel (4) inside the tunnel (4) itself.

3. The concertina device according to any one of claims 1 to 2, **characterised in that** the tunnel (4) is fitted on the closing bottom (12).

4. The concertina device according to any one of claims 1 to 3, **characterised in that** the first and second stiffening frames (8, 14) are U-shaped, each having a central stretch (8a, 14a) which is rectilinear and horizontal and two end stretches (8b, 14b) which are rectilinear and vertical, which are joined to the central stretch (8a, 14a) by rounded corner portions (8c, 14c).

5. The concertina device according to any one of claims 1 to 4, **characterised in that** the second bands (13) and the second stiffening frames (14) of the closing bottom (12) are aligned with the corresponding first bands (7) and first stiffening frames (8) of the tunnel (4) along respective closing lines (L1, L2) in the shape of a ring.

6. An articulated bus, comprising:
at least two articulated units;
a connecting joint and junction interposed between the units to allow the relative movement;
a concertina device according to any one of the preceding claims, designed to close the space between the two articulated units at the connecting joint.

7. A method for replacing an existing concertina device for connecting and closing the space between two units of an articulated bus, with the existing concertina device comprising a plurality of first stiffening frames and a concertina element extending in the form of a ring in the closed space comprising a lower wall, a pair of side walls facing each other and connected on both sides to the upper wall and a lower wall connected on both sides to the side walls, the method comprising the following steps:
- cutting a lower portion of the side walls of the existing concertina element, annulling the existing concertina device in such a way as to define an upper portion and a lower portion and removing the lower portion;
- preparing a closing bottom (12) of a concertina device comprising a plurality of second bands (13) made of flexible material, joined together one alongside the other, equipped with a plurality of second stiffening frames (14), wherein the closing bottom (12) comprises a lower wall (15) and two side walls (16),
- coupling the closing bottom (12) to the upper portion of the existing concertina device defined by the cutting, by coupling the second stiffening frames (14) to the first stiffening frames, thus defining the concertina device according to any of the previous claims.

## Patentansprüche

1. Faltenbalgvorrichtung zum Verbinden und Schließen des Bereichs zwischen zwei Gelenkeinheiten eines Gelenkbusses, die zwei Teile umfasst: einen oberen Teil (100), aufweisend eine umgekehrte U-Form und einen Verschlussboden (12) mit einer U-Form, wobei der obere Teil (100) eine Vielzahl von ersten Bändern (7) umfasst, die mit einem Faltenbalgprofil ausgebildet sind, bestehend aus flexiblem Material, jeweils aneinander zusammengefügt, ausgestattet mit einer Vielzahl von ersten Versteifungsrahmen (8) und formend einen Tunnel (4), aufweisend eine obere Wand (10) und zwei Seitenwände (11) zum Verbinden zweier Wagen (3) eines Fahrzeugs (2), wobei die Faltenbalgvorrichtung zudem eine Vielzahl von zweiten Bändern (13) umfasst, bestehend aus flexiblem Material, jeweils aneinander zusammengefügt, ausgestattet mit einer Vielzahl von zweiten Versteifungsrahmen (14) und formend den genannten Verschlussboden (12) zum Verschließen des Tunnels (4), wobei der Verschlussboden (12) entfernbar mit dem oberen Teil (100) verbindbar ist und eine untere Wand aufweist (15), die gegenüberliegend zur oberen Wand (10) des Tunnels (4) angeordnet ist, und zwei Seitenwände (16), die seitlich entlang der Seitenwände (11) des Tunnels (4) und in Kontakt in den Seitenwänden (11) des Tunnels (4) angeordnet sind, und wobei die Faltenbalgvorrichtung (1) in der Zone, in der sich die Seitenwände (16) des Verschlussbodens (12) seitlich entlang der Seitenwände (11) des Tunnels (4) befinden, eine doppelte Schicht aufweist, geformt durch die ersten und zweiten Bänder (7, 13), wobei die Faltenbalgvorrichtung **dadurch gekennzeichnet ist, dass** die ersten Versteifungsrahmen (8) und der zweite Versteifungsrahmen (14) durch Befestigungsmittel (18) zusammengefügt sind, und dadurch dass an einem jeden ersten Versteifungsrahmen (8) der untere Streifen des Tunnels (4) einen Schlitz (19) aufweist, durch den der erste Versteifungsrahmen (8) verbunden und am entsprechenden zweiten Versteifungsrahmen (14) fixiert ist.

2. Faltenbalgvorrichtung nach Anspruch 1, **dadurch gekennzeichnet, dass** die zwei Seitenwände (16) seitlich entlang der Seitenwände (11) des Tunnels (4) im Tunnel (4) angeordnet sind.

3. Faltenbalgvorrichtung nach einem der Ansprüche 1 bis 2, **dadurch gekennzeichnet, dass** der Tunnel (4) am Verschlussboden (12) angebracht ist.

4. Faltenbalgvorrichtung nach einem der Ansprüche 1 bis 3, **dadurch gekennzeichnet, dass** die ersten und zweiten Versteifungsrahmen (8, 14) U-förmig sind, jeweils aufweisend ein mittiges Teilstück (8a, 14a), das geradlinig und horizontal ist, und zwei Endteilstücke (8b, 14b), die geradlinig und vertikal sind, die mit dem mittigen Teilstück (8a, 14a) durch abgerundete Eckabschnitte (8c, 14c) zusammengefügt sind.

5. Faltenbalgvorrichtung nach einem der Ansprüche 1 bis 4, **dadurch gekennzeichnet, dass** die zweiten Bänder (13) und die zweiten Versteifungsrahmen (14) des Verschlussbodens (12) mit den entsprechenden ersten Bändern (7) und den ersten Versteifungsrahmen (8) des Tunnels (4) entlang jeweiliger Verschlusslinien (L1, L2) in der Form eines Rings ausgerichtet sind.

6. Gelenkbus, umfassend:
mindestens zwei Gelenkeinheiten;
ein Verbindungsgelenk und Anschlussstück, eingesetzt zwischen den Einheiten, um die entsprechende Bewegung zu erlauben;
eine Faltenbalgvorrichtung nach einem der vorhergehenden Ansprüche, ausgestaltet, um den Bereich zwischen den zwei Gelenkeinheiten am Verbindungsgelenk zu verschließen.

7. Verfahren zum Ersetzen einer bestehenden Faltenbalgvorrichtung zum Verbinden und Schließen des Bereichs zwischen zwei Einheiten eines Gelenkbusses, wobei die bestehende Faltenbalgvorrichtung eine Vielzahl von ersten Versteifungsrahmen und ein Faltenbalgelement umfasst, das sich in der Form eines Rings im geschlossenen Bereich erstreckt, umfassend eine untere Wand, ein Paar Seitenwände, die einander zugewandt sind und an beiden Seiten mit der oberen Wand verbunden sind, und eine untere Wand, die an beiden Seiten mit den Seitenwänden verbunden ist, wobei das Verfahren die folgenden Schritte umfasst:
- Abschneiden eines unteren Abschnitts der Seitenwände des bestehenden Faltenbalgelements unter Beseitigung der bestehenden Faltenbalgvorrichtung, sodass ein oberer Abschnitt und ein unterer Abschnitt definiert werden, und Entfernen des unteren Abschnitts;
- Vorbereiten eines Verschlussbodens (12) einer Faltenbalgvorrichtung, umfassend eine Vielzahl von zweiten Bändern (13), bestehend aus flexiblem Material, jeweils aneinander zusammengefügt, ausgestattet mit einer Vielzahl von zweiten Versteifungsrahmen (14), wobei der Verschlussboden (12) eine untere Wand (15) und zwei Seitenwände (16) umfasst;
- Kuppeln des Verschlussbodens (12) am oberen Abschnitt der bestehenden Faltenbalgvorrichtung, definiert durch das Abschneiden, indem die zweiten Versteifungsrahmen (14) an den ersten Versteifungsrahmen gekuppelt werden, so definierend die Faltenbalgvorrichtung nach dem vorhergehenden Anspruch.

## Revendications

1. Dispositif en accordéon pour relier et fermer l'espace entre deux unités articulées d'un bus articulé, comprenant deux parties : une partie supérieure (100) ayant une forme en « U » inversé et un fond de fermeture (12) en forme de « U », la partie supérieure (100) comprenant une pluralité de premières bandes (7), réalisées avec un profil en accordéon, en matériau souple, jointes les unes à côté des autres, équipées d'une pluralité de premiers cadres de raidissement (8) et formant un tunnel (4) comportant une paroi supérieure (10) et deux parois latérales (11) servant à relier entre elles deux voitures (3) d'un véhicule (2), le dispositif en accordéon comprenant de plus une pluralité de secondes bandes (13) en matériau flexible, jointes les unes à côté des autres, équipées d'une pluralité de seconds cadres de raidissement (14) et formant le fond de fermeture (12) cité pour fermer le tunnel (4), dans lequel le fond de fermeture (12) peut être relié de façon amovible à la partie supérieure (100) et comprend une paroi inférieure (15) étant opposée à la paroi supérieure (10) du tunnel (4) et à deux parois latérales (16) étant situées latéralement le long des parois latérales (11) du tunnel (4) et en contact à l'intérieur des parois latérales (11) du tunnel (4) et dans lequel, dans la zone dans laquelle les parois latérales (16) du fond de fermeture (12) sont latéralement situées le long des parois latérales (11) du tunnel (4), l'accordéon (1) comporte une double couche formée par les premières et secondes bandes (7, 13), le dispositif en accordéon étant **caractérisé en ce que** les premiers cadres de raidissement (8) et le second cadre de raidissement (14) sont reliés entre eux par des moyens de fixation (18) et **en ce qu'**à chaque premier cadre de raidissement (8), la bande inférieure du tunnel (4) comporte une fente (19) à travers laquelle le premier cadre de raidissement (8) est relié et fixé au second cadre de raidissement (14) correspondant.

2. Dispositif en accordéon selon la revendication 1, **caractérisé en ce que** les deux parois latérales (16) sont latéralement situées le long des parois latérales (11) du tunnel (4) à l'intérieur du tunnel (4) lui-même.

3. Dispositif en accordéon selon l'une quelconque des revendications 1 à 2, **caractérisé en ce que** le tunnel (4) est monté sur le fond de fermeture (12).

4. Dispositif en accordéon selon l'une quelconque des revendications 1 à 3, **caractérisé en ce que** les premiers et seconds cadres de raidissement (8, 14) sont en forme de « U », chacun comportant une portion centrale (8a, 14a) étant rectiligne et horizontale et deux portions d'extrémité (8b, 14b) étant rectilignes et verticales, qui sont reliées à la portion centrale (8a, 14a) par des portions d'angle arrondies (8c, 14c).

5. Dispositif en accordéon selon l'une quelconque des revendications 1 à 4, **caractérisé en ce que** les secondes bandes (13) et les seconds cadres de raidissement (14) du fond de fermeture (12) sont alignés avec les premières bandes (7) et les premiers cadres de raidissement (8) correspondants du tunnel (4) le long de lignes de fermeture (L1, L2) respectives en forme d'anneau.

6. Bus articulé, comprenant :
au moins deux unités articulées ;
un joint et une jonction de raccordement interposés entre les unités pour permettre le mouvement relatif ;
un dispositif en accordéon selon l'une quelconque des revendications précédentes, conçu pour fermer l'espace entre les deux unités articulées en correspondance du joint de raccordement.

7. Procédé de remplacement d'un dispositif en accordéon existant servant à relier et à fermer l'espace entre deux unités d'un bus articulé, le dispositif en accordéon existant comprenant une pluralité de premiers cadres de raidissement et un élément en accordéon se prolongeant sous la forme d'un anneau dans l'espace fermé comprenant une paroi inférieure, une paire de parois latérales se faisant face et reliées des deux côtés à la paroi supérieure et une paroi inférieure reliée des deux côtés aux parois latérales, le procédé comprenant les étapes suivantes :
- découper une partie inférieure des parois latérales de l'élément en accordéon existant, annuler le dispositif en accordéon existant de manière à définir une partie supérieure et une partie inférieure et retirer la partie inférieure ;
- préparer un fond de fermeture (12) d'un dispositif en accordéon comprenant une pluralité de secondes bandes (13) en matériau flexible, jointes les unes à côté des autres, équipées d'une pluralité de seconds cadres de raidissement (14), dans lequel le fond de fermeture (12) comprend une paroi inférieure (15) et deux parois latérales (16),
- coupler le fond de fermeture (12) à la partie supérieure du dispositif en accordéon existant défini par la découpe, en couplant les seconds cadres de raidissement (14) aux premiers cadres de raidissement, définissant ainsi le dispositif en accordéon selon l'une des revendications précédentes.
